# EUROPEAN PATENT APPLICATION

(11) **EP 3 770 414 A1**
(43) Date of publication of application: **27.01.2021**
(21) Application number: 20183051.0
(22) Date of filing: 30.06.2020
(51) Int. Cl.: F02K 1/08

(54) **PROPULSION SYSTEM FOR AN AIRCRAFT AND METHOD OF MANUFACTURING A PROPULSION SYSTEM FOR AN AIRCRAFT**

(30) Priority: 25.07.2019 US 201916522463
(71) Applicant: Gulfstream Aerospace Corporation, Savannah, Georgia 31402 (US)
(72) Inventor: FREUND, Donald, Savannah, Georgia 31402 (US); RYBALKO, Michael, Savannah, Georgia 31402 (US); GAVIN, Joseph R., Savannah, Georgia 31402 (US); LOUIS, John, Savannah, Georgia 31402 (US)
(74) Representative: LKGlobal UK Ltd.

(57) **Abstract**

A propulsion system for an aircraft is taught herein. The propulsion system includes, but is not limited to, an engine (22) that is configured to produce a gas jet. The propulsion system further includes a nozzle (24) that is coupled with the engine and that is disposed to receive the gas jet. The nozzle (24) has a throat (40) that is configured to expand and contract. The propulsion system still further includes a controller (26) that is operatively coupled with the throat (40). The controller (26) is configured to control the throat (40) to expand and contract and to control a magnitude of a thrust imparted by the gas jet by controlling the throat (40) to expand and contract. The controller (26) is further configured to control the magnitude of the thrust by controlling the throat (40) to expand and contract when the aircraft is flying at or above the local speed of sound.

## Description

### TECHNICAL FIELD

The present invention relates generally to an aircraft, and more particularly relates to a propulsion system for an aircraft and a method of manufacturing the propulsion system.

### BACKGROUND

In flight, an aircraft powered by one or more jet engines typically flies at a predetermined speed *(e.g.,* a cruise speed, a design speed, a design cruise speed). To reach the predetermined speed, the jet aircraft must accelerate through lower speeds. To accelerate, the thrust generated by the jet engine(s) must exceed the drag exerted on the aircraft by the freestream. Once the aircraft reaches the predetermined speed, the thrust of the engine(s) is reduced to a magnitude that is equal to drag. When the thrust of the engine(s) is equal to drag, the aircraft will fly at a steady speed without further acceleration.

In order to accelerate, the aircraft's jet engine(s) must be capable of generating a thrust that is greater than the drag acting on the aircraft. The thrust produced by the jet engine is a result of compressing the air entering through the inlet, raising the temperature of the compressed air by injecting and then igniting fuel and then expelling the products of combustion, i.e. a gaseous jet, out of the engine through an exhaust nozzle. This process is referred to as the jet engine thermodynamic cycle. For a typical turbofan or turbojet thermodynamic cycle, the thrust is proportional to the engine mass flow, the velocity increase of the exhaust flow relative to the inlet flow and the increase in pressure at the nozzle exit relative to free stream.

The mass flow rate is determined, in part, by the capture area of the inlet of the propulsion system and the pumping characteristics of the engine. The larger the inlet is, the more air that will be captured by the inlet. The more air that is captured by the inlet, the more mass there will be flowing through the engine (up to the limits of the engine's ability to process the incoming air). The greater the mass flow rate is, for constant velocity increase and nozzle exit pressure, the greater the thrust produced by the engine. The greater the velocity increase, for constant mass flow and exit pressure, the greater the thrust produced by the engine. The greater the exit pressure relative to free stream, for constant mass flow and velocity increase, the greater the thrust produced by the engine.

A countervailing consideration, however, is that the larger the inlet is, the greater the drag exerted on the propulsion system will be if the inlet captures more air than can be processed by the engine. In this case, the inlet spills air around the outside instead of passing it to the engine and spillage results in a performance penalty resulting from increased drag. It is generally preferable to minimize drag at cruise to maximize range. Accordingly, it is desirable to make an inlet large enough to permit the maximum mass flow rate demanded by the engine, but no larger than that to minimize spillage drag.

When designing a propulsion system, the desired thrust selected by designers is the amount of thrust needed to accelerate the aircraft to the predetermined speed. If, instead, the designers selected only the amount of thrust that would be necessary to maintain the predetermined speed (i.e., an amount of thrust that equaled drag), then the inlet would not be able to pass the demanded airflow to the engine, and the aircraft would not be able to overcome drag and, in turn, it would not be able to accelerate to the predetermined speed. Accordingly, when designing a propulsion system, the inlet is sized to capture an amount of air that is needed to support a mass flow rate through the engine that corresponds with the magnitude of thrust needed to accelerate the aircraft.

When the aircraft reaches the predetermined speed, the aircraft's throttle is pulled back. This reduces the fuel flow to the engine which, in turn, reduces the mass flow demand and diminishes the velocity increase through the engine as well as the exit pressure. These, in turn, reduce the thrust of the jet engine(s). However, when the throttle is pulled back and the mass flow demand is reduced, the inlet will continue to capture an amount of air that correlates to the higher mass flow rate through the engine (e.g., the mass flow rate corresponding with acceleration). Accordingly, when the throttle is pulled back from an acceleration setting to a cruise setting, only a portion of the air that is captured by the inlet can actually be pumped by the engine and, as a result, some of the captured air spills around the inlet.

When an aircraft is flying at supersonic speeds, the spillage of the excess air will not only increase drag, but it will also increase the magnitude of the aircraft's sonic boom. This increase in the magnitude of the sonic boom is undesirable.

Accordingly, it is desirable to provide a propulsion system that addresses the concerns expressed above. It is also desirable to provide a method of manufacturing such a propulsion system. Furthermore, other desirable features and characteristics will become apparent from the subsequent summary and detailed description and the appended claims, taken in conjunction with the accompanying drawings and the foregoing technical field and background.

### BRIEF SUMMARY

An aircraft propulsion system and a method of manufacturing an aircraft propulsion system are disclosed herein.

In first non-limiting embodiment, the aircraft propulsion system includes, but is not limited to, an engine that is configured to produce a gas jet. The aircraft propulsion system further includes, but is not limited to, a nozzle that is coupled with the engine and that is disposed to receive the gas jet. The nozzle has a throat that is configured to expand and contract. The aircraft propulsion system still further includes, but is not limited to, a controller that is operatively coupled with the throat. The controller is configured to control the throat to expand and contract, and to control a magnitude of a thrust imparted by the gas jet by controlling the throat to expand and contract. The controller is further configured to control the magnitude of the thrust by controlling the throat to expand and contract when the aircraft is flying at at least a local speed of sound.

In another non-limiting embodiment, the method includes, but is not limited to, obtaining an engine, a nozzle, and a controller. The engine is configured to generate a gas jet. The nozzle has a throat that is configured to expand and contract. The controller is configured to control the throat to expand and contract and further configured to control a magnitude of a thrust generated by the gas jet by controlling the throat to expand and contract. The controller is further configured to control the magnitude of the thrust by controlling the throat to expand and contract when the aircraft is flying at at least a local speed of sound. The method further includes, but is not limited to, coupling the nozzle with the engine in a position to receive the gas jet. The method still further includes, but is not limited to, operatively coupling the controller with the nozzle.

### BRIEF DESCRIPTION OF THE DRAWINGS

The present invention will hereinafter be described in conjunction with the following drawing figures, wherein like numerals denote like elements, and
FIG. 1 is a block diagram illustrating an aircraft configured with a non-limiting embodiment of a propulsion system made in accordance with the teachings disclosed herein;
FIG. 2 is a schematic view illustrating another non-limiting embodiment of a propulsion system made in accordance with the teachings disclosed herein;
FIG. 3 is an expanded schematic view illustrating a portion of the propulsion system illustrated in FIG. 2;
FIG. 4 is a schematic view illustrating another non-limiting embodiment of a propulsion system made in accordance with the teachings disclosed herein;
FIG. 5 is an expanded schematic view illustrating a portion of the propulsion system illustrated in FIG. 4;
FIG. 6 is a schematic view of a portion of the propulsion system of FIG. 4, viewed in an axial direction; and
FIG. 7 is a block diagram illustrating a non-limiting embodiment of a method for manufacturing a propulsion system in accordance with the teachings herein.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved propulsion system for use with an aircraft is disclosed herein. In an embodiment, the propulsion system includes an engine, a nozzle, and a controller operatively connected with both the nozzle and the engine. In other embodiments, the propulsion system may include additional components, including, but not limited to, a component that is configured to receive user inputs and an adjustable nozzle exit. Still other components may be included in the propulsion system without departing from the teachings disclosed herein.

The engine is configured to produce a gas jet. In a non-limiting embodiment, the engine may comprise a gas turbine, though one of ordinary skill in the art will appreciate that other types of engines can also produce a gas jet and that the teachings contained herein are compatible with such other types of engines. Accordingly, the teachings herein are not limited to use only with gas turbine engines. The gas jet is comprised of the air entering and passing through the engine, including any air passing through an engine bypass. The gas jet is further comprised of the fuel injected into the engine for combustion in the engine's combustion chamber. The gas jet is still further comprised of the products of combustion. The gas jet is ejected out of the aft end of the engine. This aftward movement of the gas jet gives rise to thrust. The gas jet will move aftward at a rate based on the engine thermodynamic cycles and throat area, which is determined by the engine's operational settings. In the absence of any alterations being made to the engine's operational settings, the mass flow rate through the engine will remain substantially constant. The higher the mass flow rate is, the greater will be the thrust generated by the engine for a given increase in velocity and constant exit pressure. As used herein, the phrase "substantially constant", when used in conjunction with the phrase "mass flow rate" shall be interpreted to mean that the mass flow rate does not increase or decrease by an amount greater than ten percent.

The nozzle is coupled with the engine and is disposed aft of the engine to receive the gas jet. The nozzle includes an internal pathway that allows the nozzle to direct the gas jet as it moves downstream from the engine. The internal pathway includes a throat. As is known to those of ordinary skill in the art, a nozzle's throat is the part of the nozzle (e.g., the point, portion, or section) where cross-sectional area normal to the direction of fluid flow is the smallest. In the propulsion system disclosed herein, the nozzle's throat is configured to expand and contract. When the throat expands or contracts, the cross-sectional area through which the gas jet passes will increase or decrease, respectively. The expansion and contraction of the throat affects the thrust generated by the gas jet. When the throat is contracted, the gas jet will impart a greater thrust. This is because a smaller throat raises the back pressure on the engine because the gas jet must now pass through a smaller passage way. Since the mass flow rate produced by the engine, at a constant rotational speed, that is fed into the nozzle is nearly constant, the contraction of the passageway will necessarily cause the gas jet to flow at a higher speed, similar to the way in which water exiting a garden hose increases its exit speed when a portion of the hose near the exit is compressed. This higher speed of the gas jet will, in turn, yield a higher thrust than that thrust that was produced prior to contraction of the throat. Conversely, when the throat is expanded, at a constant rotational speed, the gas jet will impart less thrust. This is because the gas jet will be passing through a larger passage way that lowers the back pressure on the engine. Since the mass flow rate produced by the engine and fed into the nozzle is constant at a constant rotational speed, the expansion of the passageway will necessary result in a lower speed for the gas jet. This lower speed will cause the gas jet to impart a lower thrust than it imparted prior to the expansion.

The controller is operatively coupled with the throat of the nozzle and is configured to control the throat to expand and/or contract. The controller is further configured to expand and contract the throat to control the magnitude of the thrust generated by the gas jet. In this manner, the controller is able to control the propulsion system to generate a greater or lesser amount of thrust simply by manipulating the cross-sectional area of the throat which does not alter the mass flow rate through the engine. Thus, the controller can increase or decrease thrust to satisfy the demands of changing flight conditions and/or aircrew inputs without causing any air significant spillage at the inlet. This, in turn will avoid the negative impact on drag and sonic boom that currently arises when the engine's settings are altered to change propulsion system thrust. When used in conjunction with the phrase "significant spillage at the inlet", in some embodiments the term "significant" should be understood to mean up to and including 20.0 percent of the mass flow rate. In still other embodiments, "significant" should be understood to mean spillage that causes up to and including 20.0 decibels of increased perceived loudness (20.0 PLdB) of the sonic boom at ground level relative to an inlet where the flow has zero spillage. In still other cases, "significant" should be understood to mean spillage that results in up to and including 40 counts of increased drag.

A greater understanding of the propulsion system discussed above and a method of manufacturing the propulsion system may be obtained through a review of the illustrations accompanying this application together with a review of the detailed description that follows.

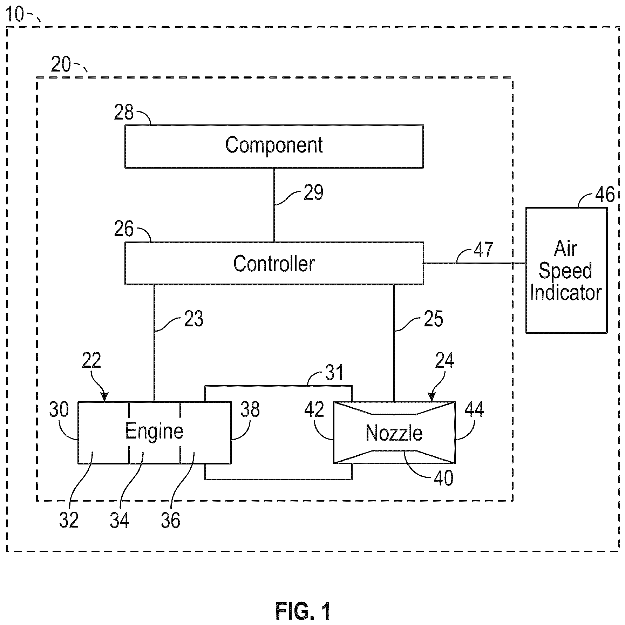

FIG. 1 is a block diagram illustrating an aircraft 10 configured with a non-limiting embodiment of a propulsion system 20. In the illustrated embodiment, propulsion system 20 includes an engine 22, a nozzle 24, a controller 26, and a component 28. It should be understood that propulsion system 20 is not limited to these components. In other embodiments, a greater or lesser number of components may be included. For example, in other embodiments, component 28 may be omitted or additional items, such as an inlet, a compression surface, or a nacelle may be included without departing from the teaching disclosed herein.

In the embodiment illustrated in FIG. 1, engine 22 comprises a gas turbine which is configured to produce a gas jet during operation. It should be understood, however, that propulsion system 20 is not limited to use with gas turbines. In other embodiments, engine 22 may comprise any other type of engine that is configured to generate a gas jet including, but not limited to, a ramjet or scramjet engine.

When operating, engine 22 will receive incoming air from the freestream. In some embodiments, this air will be directed to an entry plane 30 of engine 22 by an inlet. The air will pass through a compressor section 32 where it will be compressed to increase its density and pressure. The compressed air will then pass into a combustion chamber 34. In combustion chamber 34, fuel is sprayed into the compressed air and electric sparks are introduced to cause the fuel air mixture to ignite. This mixture of products of combustion and air expands thru a turbine 36 which, in turn, drives the compressor. This rapidly expanding heated air and the products of combustion are then ejected from an aft end 38 of engine 22 in the form of a gas jet. The gas jet is a very high energy flowing fluid. The aftward movement of the gas jet imparts thrust to engine 22 in a direction opposite to the direction that the gas jet flows in.

In the embodiment illustrated in FIG. 1, nozzle 24 comprises a converging/diverging nozzle. In some embodiments, nozzle 24 may be axisymmetric while in other embodiments, nozzle 24 may be non-axisymmetric; both configurations are compatible with the teachings presented herein.

Nozzle 24 includes a throat 40. Throat 40 is configured to expand and contract such that its cross-sectional area increases and decreases, respectively. While some examples of mechanisms that permit the expansion and contraction of throat 40 are discussed in detail below, it should be understood that any suitable mechanism, configuration, or machinery that is effective to expand and contract the cross-sectional dimensions of throat 40 may be employed with nozzle 24 without departing from the teachings of the present disclosure. In some non-limiting embodiments, the throat and/or related mechanisms may be configured to permit expansion and contraction of the throat in a manner that is substantially continuously variable. In other embodiments, the throat and or related mechanisms may be configured to permit expansion and contraction of the throat in a manner that is incremental and decremental in nature such that the throat will expand and/or contract in finite steps.

Nozzle 24 is configured to receive the gas jet at an entry plane 42, to direct the gas jet in the aft direction through throat 40, and then to guide the gas jet towards an exit plane 44 of the nozzle. At the exit plane, the nozzle ejects the gas jet in a coherent stream into the freestream. Although nozzle 24 in FIG. 1 comprises a converging/diverging nozzle, it should be understood that the present disclosure is not limited to the use of converging/diverging nozzles. Rather, in other embodiments, any type of nozzle that includes a throat that is configured to be expanded and contracted may also be employed without departing from the teachings of the present disclosure.

In the embodiment illustrated in FIG. 1, nozzle 24 is coupled with the aft end of engine 22. The coupling of converging/diverging nozzles to gas turbines is well known in the art. In some embodiments, nozzle 24 may be fluidly coupled with engine 22. In the illustrated embodiment, nozzle 24 is fluidly coupled with engine 22 via fluid coupling 31. Fluid coupling 31 may be any conduit, mechanism, or method of attaching nozzle 24 to engine 22 that is effective to direct the gas jet emitted by engine 22 into nozzle 24. In some embodiments, fluid coupling 31 may comprise a nacelle or a portion of a nacelle. In some embodiments, fluid coupling 31 may be configured to cause the entire gas jet to flow into nozzle 24 while in other embodiments, fluid coupling 31 may be configured to direct only a portion of the gas jet to flow into nozzle 24.

In the embodiment illustrated in FIG. 1, exit plane 44 of nozzle 24 is configured to remain static. In other words, exit plane 44 is not configured to expand and contract. In other embodiments, such as the embodiments discussed below, the nozzle's exit plane may be configured to expand and contract.

Controller 26 may be any type of onboard computer, controller, micro-controller, circuitry, chipset, computer system, processor or microprocessor that is configured to perform algorithms, to execute software applications, to execute sub-routines and/or to be loaded with and to execute any other type of computer program and/or software. Controller 26 may comprise a single processor or a plurality of processors acting in concert. In some embodiments, controller 26 may be dedicated for use exclusively with propulsion system 20 while in other embodiments controller 26 may be shared with other systems on board aircraft 10.

Component 28 may be any suitable component that is configured to communicate requests for and/or instructions to change the thrust output of propulsion system 20 to controller 26. In an exemplary embodiment, component 28 may comprise a throttle. In another exemplary embodiment, component 28 may comprise a processor that is associated with an autopilot system of aircraft 10. Any other component suitable for delivering appropriate requests/instructions to controller 26 for changes in thrust output may also be used without departing from the teachings of the present disclosure.

In the embodiment illustrated in FIG. 1, controller 26 is operatively coupled with engine 22 via operative coupling 23, operatively coupled with throat 40 via operative coupling 25 and communicatively coupled with component 28 via communicative coupling 29. Such couplings may be effected through the use of any suitable means of transmission including both wired and wireless connections. For example, each component may be physically coupled to controller 26 via a coaxial cable or via any other type of wire connection effective to convey signals. In some embodiments, optical communications including, but not limited to, fiber optics may be employed to achieve the above referenced operative and communicative couplings without departing from the teachings of the present disclosure. In the illustrated embodiment, controller 26 is directly coupled to each of the other components. In other embodiments, each component may be coupled to controller 26 across a communication bus. In still other examples, each component may be wirelessly coupled to controller 26 via a Bluetooth connection, a WiFi connection, a dedicated short-range radio connection, fiber optics or the like. In further examples, it may be also possible to couple via hydraulic systems.

Being operatively and/or communicatively coupled provides a pathway for the transmission of commands, instructions, interrogations and other signals between controller 26 and each of the other components. Through this coupling, controller 26 may control and/or communicate with each of the other components. Each of the other components discussed above are configured to interface and engage with controller 26. For example, engine 22 is configured to receive commands from controller 26 and to alter or maintain various engine settings in accordance with such commands. Throat 40 is configured to expand, contract, or maintain its cross-sectional dimensions in response to commands received from controller 26. Component 28 is configured to transmit requests and/or instructions to change the thrust output of propulsion system 20 to controller 26.

Controller 26 is configured to interact with, coordinate and/or orchestrate the activities of engine 22, throat 40, and component 28 for the purpose of controlling the thrust generated by propulsion system 20 without altering the rate of the mass flow through engine 22. In an embodiment, when controller 26 receives a request and/or an instruction to change the thrust output of propulsion system 20, rather than alter the settings of engine 22 as controllers are configured to do in conventional propulsion systems, controller 26 is configured to control throat 40 in a manner that alters the cross-sectional area of throat 40 while maintaining the current settings of engine 22 that would conventionally be altered to adjust thrust. If the request for a change in thrust comprises a request to increase the thrust, then controller 26 is configured to control throat 40 to decrease its cross-sectional area. Conversely, if the request for a change in thrust comprises a request to reduce thrust, controller 26 is configured to control throat 40 to increase its cross-sectional area. In some embodiments, controller 26 may be configured to expand and contract throat 40 such that its cross-sectional area varies between predetermined magnitudes (i.e., vary in incremental and decremental steps) that have been predetermined to provide known incremental changes in thrust. In other embodiments, controller 26 may be configured to expand and contract throat 40 such that its cross-sectional area is continuously variable and therefore can be specifically tailored to adjust the thrust by the specific amount requested or required.

In the embodiment illustrated in FIG. 1, aircraft 10 includes a system that is configured to measure the speed of aircraft 10 in flight. Specifically, aircraft 10 is configured with an air speed indicator 46 which may be configured to provide a calibrated air speed, and/or an indicated airspeed of aircraft 10 during flight operations to controller 26. Airspeed indicator 46 is communicatively coupled with controller 26 via communicative coupling 47 and controller 26 is configured to obtain the airspeed of aircraft 10 from airspeed indicator 46. In some embodiments, controller 26 may be configured to interrogate airspeed indicator 46 to obtain the airspeed of aircraft 10 and in other embodiments, airspeed indicator 46 may be configured to automatically provide the airspeed of aircraft 10 to controller 26.

Controller 26 is configured to utilize the airspeed measured by air speed indicator 46 when controller 26 is controlling the thrust produced by propulsion system 20. Controller 26 is configured such that, when the airspeed of aircraft 10 is equal to, or greater than, the local speed of sound, then in response to a request for a change in thrust, controller 26 will control engine 22 to maintain its current settings and operating conditions (which will keep the mass flow rate through engine 22 nearly constant) and will control throat 40 to increase or decrease its cross-sectional area (which will decrease or increase, respectively, the thrust output of propulsion system 20. Controller 26 is further configured such that, when the airspeed of aircraft 10 is lower than the local speed of sound, then in response to a request for a change in thrust, controller 26 will control engine 22 to increase or decrease the mass flow, as needed, and will control throat 40 to maintain its current configuration. In this manner, controller 26 can avoid the air spillage described in the background section above when aircraft 10 is traveling at or above the speed of sound but still manage propulsion system thrust conventionally when aircraft 10 is traveling below the local speed of sound. In other embodiments, controller 26 may be configured to control the thrust output of propulsion system 20 by contemporaneously controlling throat 40 to contract and by controlling engine 22 to alter its settings in instances where aircraft 10 is flying at or above the speed of sound and the amount of change in thrust requested/instructed by component 28 is greater the amount of change in thrust that can be provided by only expanding or contracting the cross-sectional area of the throat.

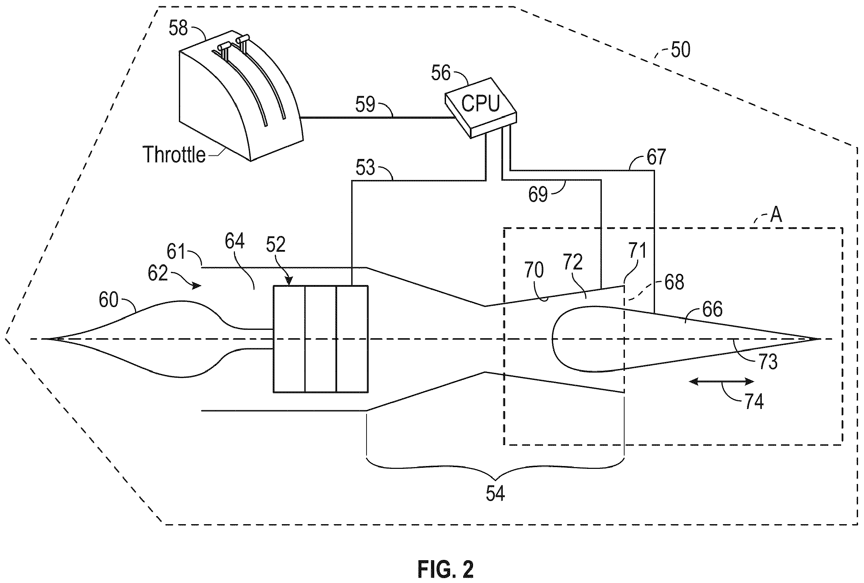

FIG. 2 is a schematic view illustrating a propulsion system 50. With continuing reference to FIG. 1, Propulsion system 50 is a non-limiting embodiment of propulsion system 20. As with propulsion system 20, propulsion system 50 includes an engine 52, a nozzle 54, a controller 56, and a component 58. In propulsion system 50, engine 52 comprises a gas turbine, nozzle 54 comprises an axisymmetric converging/diverging nozzle, controller 56 comprises a central processing unit (CPU), and component 58 comprises a throttle. These components perform the functions set forth above in the discussion of propulsion system 20 that accompanied FIG. 1. For purposes of brevity, that discussion will not be repeated here, but should be understood to apply with equal force.

Propulsion system 50 further includes some additional components that were not discussed above with respect to propulsion system 20. For example, propulsion system 50 includes a compression surface 60, a cowl lip 61, an inlet 62, a diffuser 64, a nozzle plug 66, and an adjustable nozzle exit 71.

Compression surface 60 is contoured and configured to change the direction of an oncoming supersonic flow from moving in an entirely axial direction to moving in a partially radially outward direction. The act of turning the supersonic flow in a partially radially outward direction slows the supersonic flow prior to reaching a terminal shock which, in some embodiments, resides at or about inlet 62. After passing over compression surface 60, freestream air will enter propulsion system 50 through inlet 62, which is an annular opening bounded on one side by compression surface 60 and on an opposite side by cowl lip 61. After passing through inlet 62, the captured air is slowed by diffuser 64. Diffuser 64 comprises a chamber having a cross-sectional area that increases in magnitude in the downstream direction. As the cross-sectional area increases, the captured air slows to a speed that will be more compatible with the turbomachinery of engine 52.

At the aft end of propulsion system 50 is adjustable nozzle exit 71. In some propulsion systems, it is desirable to control a nozzle's exit plane to expand and contract in order to adjust the dimensions and/or the static pressure of the gas jet as it exits the propulsion system. This is accomplished by configuring the nozzle with a trailing edge (adjustable nozzle exit 71) that can at least partially open and at least partially close. Configuring a nozzle exit to partially open and partially close to adjust the gas jet is well known in the art. In the illustrated embodiment, adjustable nozzle exit 71 is configured to expand and contract to at least partially open and at least partially close, respectively, the aft end of nozzle 54. In other embodiments, the nozzle exit may be static, meaning that it neither expands nor contracts nor alters its periphery in any manner.

Propulsion system 50 further includes a nozzle plug 66. In the illustrated embodiment, nozzle plug 66 comprises an axisymmetric body that is partially positioned inside of adjustable nozzle exit 71. It should be understood that nozzle plug 66 need not be axisymmetric, but rather may have any suitable configuration. Nozzle plug 66 extends across exit plane 68 and protrudes in the downstream direction aft of nozzle 54 and in the upstream direction into an aft portion of nozzle 54. In the illustrated embodiment, nozzle throat 72 comprises the annular region between nozzle plug 66 and internal surface 70 because this region comprises the portion of the airflow's pathway through nozzle 54 having the smallest cross-sectional area. It should be understood that in embodiments where either nozzle 54 or nozzle plug 66 are non-axisymmetric, nozzle throat 72 would have a non-annular configuration. Such a non-annular configuration for a nozzle throat would also fall within the scope of the teachings disclosed herein.

In the embodiment illustrated in FIG. 2, nozzle plug 66 is configured to translate along longitudinal axis 73 in the directions indicated by arrow 74 (i.e., fore and aft). Nozzle plug 66 may employ any suitable mechanism effective to translate nozzle plug 66 fore and aft. As explained in detail below, the fore and aft movement of nozzle plug 66 will cause nozzle throat 72 to contract and expand, respectively. In some embodiments, plug 66 is configured to translate between two or more longitudinally arranged detent position. In such embodiments, the two or more detent positions of plug 66 correspond with the predetermined cross-sectional throat areas, discussed above. In other embodiments, plug 66 may be configured to translate longitudinally in a continuously variable manner, for example, under the urging of a screw drive mechanism. In such embodiments, the continuously variable longitudinal positions of plug 66 correspond with the continuously variable cross-sectional throat areas, discussed above.

In propulsion system 50, controller 56 is operatively coupled with engine 52 via operative coupling 53 and communicatively coupled with component 58 via communicative coupling 59. These couplings are substantially identical to the couplings discussed above with respect to propulsion system 20 and, for the sake of brevity, will not be repeated here. As compared with controller 26, however, which had only a single operative coupling with nozzle 24, in the embodiment illustrated in FIG. 2, controller 56 has two operative couplings with nozzle 54, a first operative coupling with nozzle plug 66 (via operative coupling 67) and a second operative coupling with adjustable nozzle exit 71 (via operative coupling 69). This is because nozzle 24 had a static nozzle exit and therefore a second operative coupling was unnecessary while nozzle 54 includes an adjustable nozzle exit (adjustable nozzle exit 71) making a second operative coupling appropriate. As discussed above, such couplings may be achieved in any suitable manner effective to permit the transmission of interrogations, commands, and information between these components. Through these operative couplings, controller 56 is configured to control nozzle plug 66 to move fore and aft and to control adjustable nozzle exit 71 to expand and contract.

Controller 56 is further configured to receive a request/command for a change in thrust from component 58 and, in response, to control nozzle plug 66 to move fore and aft to contract and expand nozzle throat 72, respectively, as needed to accommodate the request/command. For example, if more thrust is required, controller 56 is configured to control nozzle plug 66 to move forward towards engine 52 along longitudinal axis 73 until the desired thrust has been attained. Once the desired thrust has been attained, controller 56 is configured to control nozzle plug 66 to maintain its longitudinal position along longitudinal axis 73 until a subsequent change in thrust is requested. Conversely, if less thrust is required, controller 56 is configured to control nozzle plug 66 to move aftward towards adjustable nozzle exit 71 along longitudinal axis 73 until the desired thrust has been attained. Once the desired thrust has been attained, controller 56 is configured to control nozzle plug 66 to maintain its longitudinal position along longitudinal axis 73 until a subsequent change in thrust is requested.

In some embodiments, while controlling nozzle plug 66 to move along longitudinal axis 73, controller 56 is further configured to contemporaneously control adjustable nozzle exit 71 to remain static while nozzle plug 66 is moving. In some embodiments, controller 56 is further configured to control adjustable nozzle exit 71 to remain static throughout an entire period of time or phase of flight during which the thrust of propulsion system 50 is controlled via movement of nozzle plug 66. For example, controller 56 may be configured to control adjustable nozzle exit 71 to maintain a static position throughout an entire period of the flight envelope during which aircraft 10 is flying at or above the local speed of sound. Also, as discussed above with respect to propulsion system 20, in some embodiments of propulsion system 50, controller 56 may be further configured to control engine 52 to maintain its current operating conditions during the phase of flight in which controller 52 controls the magnitude of the thrust through the expansion and contraction of nozzle throat 72. This will ensure a substantially constant mass flow rate, which is desirable.

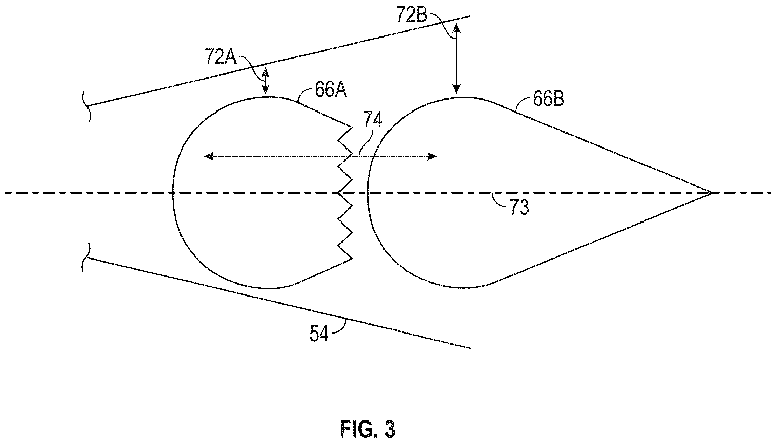

With continuing reference to FIGS. 1-2, FIG. 3 is a schematic view illustrating an expanded view of a portion of nozzle 54 and nozzle plug 66 that is delineated by the dotted line identified with the reference character A in FIG. 2. It should be understood that FIG 3 is a schematic view and is not drawn to scale.

In FIG. 3, a portion of nozzle 54 is illustrated together with nozzle plug 66. Nozzle plug 66 is presented at two different longitudinal locations along longitudinal axis 73 to represent a contracted and an expanded nozzle throat. Nozzle plug 66A is illustrated at a relatively forward position along longitudinal axis 73 while nozzle plug 66B is illustrated at a relatively aft position along longitudinal axis 73. When nozzle plug 66 is in the position occupied by nozzle plug 66A, nozzle throat 72 becomes relatively small as illustrated by nozzle throat 72A. When nozzle plug 66 is in the position occupied by nozzle plug 66B, nozzle throat 72 becomes relatively large as illustrated by nozzle throat 72B. Nozzle throat 72A will provide a relatively narrow passageway for the gas jet to travel through and, accordingly the speed of the gas jet will increase, yielding a higher thrust. Conversely, nozzle throat 72B will provide a relatively wide passageway for the gas jet to travel through and, accordingly, the speed of the gas jet will decrease. It should be understood that FIG. 3 illustrates nozzle plug 66 at only two random positions along longitudinal axis 73 and that controller 56 may be configured to move nozzle plug 66 to any suitable intermediary longitudinal position, to any suitable longitudinal position forward of nozzle plug 66A, and to any suitable longitudinal position aft of nozzle plug 66B in order to achieve the required change in thrust.

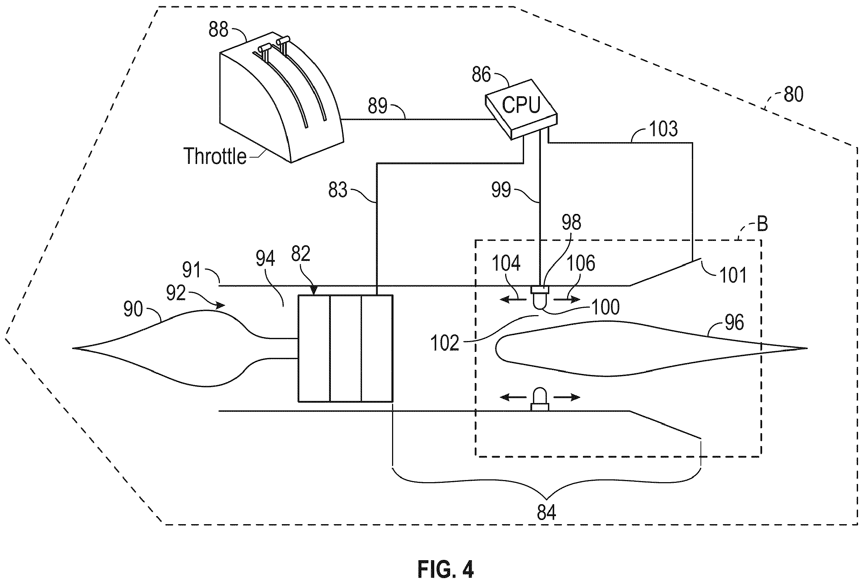

FIG. 4 is a schematic view illustrating a propulsion system 80. With continuing reference to FIGS. 1-3, Propulsion system 80 is a non-limiting embodiment of propulsion system 20. As with propulsion system 20, propulsion system 80 includes an engine 82, a nozzle 84, a controller 86, and a component 88. In propulsion system 80, engine 82 comprises a gas turbine, nozzle 84 comprises an axisymmetric converging/diverging nozzle, controller 86 comprises a central processing unit (CPU), and component 88 comprises a throttle. These components perform the functions set forth above in the discussion of FIG. 1 and for purposes of brevity, that discussion will not be repeated here. Propulsion system 80 also includes many of the components discussed above with respect to propulsion system 50. As with propulsion system 50, propulsion system 80 includes a compression surface 90, a cowl lip 91, an inlet 92, a diffuser 94, and an adjustable nozzle exit 101. These components perform the functions set forth above in the discussion of propulsion system 50 that accompanied FIG. 3. For purposes of brevity, that discussion will not be repeated here.

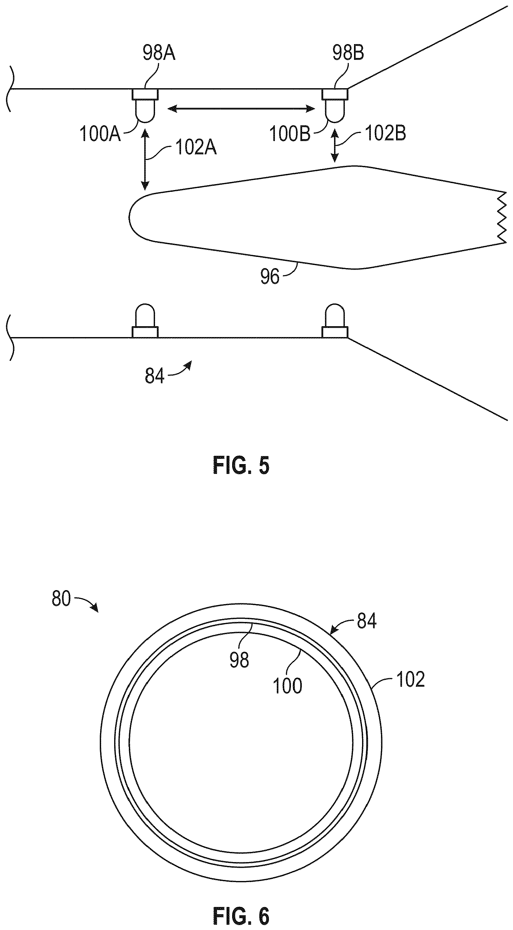

Propulsion system 80 further includes some additional components that were not discussed above with respect to propulsion system 20 or propulsion system 50. For example, propulsion system 80 a nozzle plug 96. Unlike nozzle plug 66 which was configured to translate along longitudinal axis 73, nozzle plug 96 is fixed with respect to nozzle 84 and therefore static. Nozzle 84 also includes a shroud 98. Shroud 98 has a cylindrical configuration and, as best seen in FIG. 6, is coaxial with nozzle 84. In the illustrated embodiment, shroud 98 has a relatively short longitudinal length, making it substantially annular in configuration. In other embodiments, shroud 98 may have a longer longitudinal length. Shroud 98 includes a surface 100 that protrudes radially inwardly. In the illustrated embodiment, surface 100 has a substantially elongated semi-circular configuration. In other embodiments, surface 100 may have any suitable surface contour, including, but not limited to a contour which is complementary to a surface on nozzle plug 66. In the illustrated embodiment, surface 100 and nozzle plug 96 cooperate to define nozzle throat 102. The radially inward protrusion of surface 100 causes the gas jet to converge prior to entering nozzle throat 102. Shroud 98 is configured to translate with respect to nozzle 84 in the forward direction indicated by arrow 104 and in the aft direction indicated by arrow 106. As described in greater detail below, forward movement of shroud 98 will cause nozzle throat 102 to expand and aftward movement of shroud 98 causes nozzle throat 102 to contract.

In propulsion system 80, controller 86 is operatively coupled with engine 82 via operative coupling 83 and communicatively coupled with component 88 via communicative coupling 89. These couplings are substantially identical to the couplings discussed above with respect to propulsion system 20 and, for the sake of brevity, will not be repeated here. Compared with controller 26, however, which had only a single operative coupling with nozzle 24, in the embodiment illustrated in FIG. 4, controller 56 has two operative couplings with nozzle 84, a first operative coupling with shroud 98 (operative coupling 99) and a second operative coupling with adjustable nozzle exit 101 (operative coupling 103). As discussed above, such couplings may be achieved in any suitable manner that is effective to permit the transmission of interrogations, commands, and information between these components. Through these operative couplings, controller 86 is configured to control shroud 98 to move fore and aft and to control adjustable nozzle exit 101 to expand and contract.

Controller 86 is further configured to receive a request/command for a change in thrust from component 88 and, in response, to control shroud 98 to move fore and aft to expand and contract throat 102, respectively, as needed to accommodate the request/command. For example, if more thrust is required, controller 86 is configured to control shroud 98 to move aft in the direction indicated by arrow 106 until the desired thrust has been attained. Once the desired thrust has been attained, controller 86 is configured to control shroud 98 to maintain its longitudinal position until a subsequent change in thrust is requested. Conversely, if less thrust is required, controller 86 is configured to control shroud 98 to move forward in the direction indicated by arrow 104 until the desired thrust has been attained. Once the desired thrust has been attained, controller 86 is configured to control shroud 98 to maintain its longitudinal position until a subsequent change in thrust is requested.

In some embodiments, while controlling shroud 98 to move fore and aft, controller 86 is further configured to contemporaneously control adjustable nozzle exit 101 to remain static while shroud 98 is moving. In some embodiments, controller 86 is further configured to control adjustable nozzle exit 101 to remain static throughout an entire period of time or phase of flight during which the thrust of propulsion system 80 is controlled via movement of shroud 98. For example, controller 86 may be configured to control adjustable nozzle exit 101 to maintain a static position throughout an entire period of the flight envelope during which aircraft 10 is flying at or above the local speed of sound. Also, as discussed above with respect to propulsion system 20, in some embodiments of propulsion system 80, controller 86 may be further configured to control engine 82 to maintain its current operating conditions during the phase of flight in which controller 82 controls the magnitude of the thrust through the expansion and contraction of nozzle throat 102. This will ensure a substantially constant mass flow rate, which is desirable.

With continuing reference to FIGS. 1-4, FIG. 5 is a schematic view presenting an expanded view of the portion of nozzle 84 and nozzle plug 96 that is delineated by the dotted line identified with the reference character B in FIG. 4. It should be understood that FIG 5 is a schematic view and is not drawn to scale.

In FIG. 5, a portion of nozzle 84 is illustrated together with nozzle plug 96. Also illustrated in FIG. 5 is shroud 98, which is presented at two different longitudinal locations within nozzle 84. Shroud 98A is illustrated at a relatively forward position within nozzle 84 while shroud 98B is illustrated at a relatively aft position within nozzle 84. When shroud 98 is in the position occupied by shroud 98A, the distance between surface 100A and nozzle plug 96 becomes relatively large and correspondingly, nozzle throat 102 becomes relatively large as illustrated by nozzle throat 102A. When shroud 98 is in the position occupied by shroud 98B, the distance between surface 100B and nozzle plug 96 becomes relatively small and correspondingly, nozzle throat 102 becomes relatively small as illustrated by nozzle throat 102B. Nozzle throat 102B will provide a relatively narrow passageway for the gas jet to travel through and, accordingly the speed of the gas jet will increase, yielding a higher thrust. Conversely, nozzle throat 102A will provide a relatively wide passageway for the gas jet to travel through and, accordingly, the speed of the gas jet will decrease. It should be understood that FIG. 5 illustrates shroud 98 at only two random longitudinal positions within nozzle 84 and that controller 86 may be configured to move shroud 98 to any suitable intermediary longitudinal position, to any suitable longitudinal position forward of shroud 98A, and to any suitable longitudinal position aft of shroud 98B in order to achieve the required change in thrust.

FIG. 6 is a schematic view of a portion of propulsion system 80 viewed in an axial direction looking into adjustable nozzle exit 101. In this view, it can be seen that shroud 98 together with surface 100 comprise a cylindrical component that nest in a coaxial arrangement within nozzle 84.

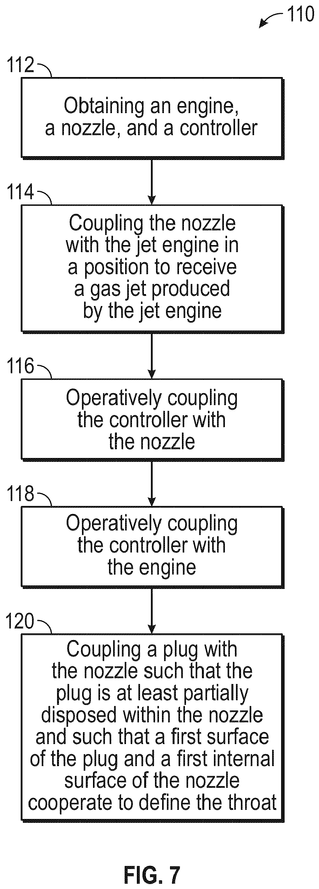

FIG. 7 is a block diagram illustrating an embodiment of a method 110 of manufacturing a propulsion system for an aircraft. Although method 110 depicts a total of five method steps, it should be understood that in other embodiments, method 110 may be practiced using either fewer or additional steps without departing from the teachings of the present disclosure.

With continuing reference to FIGS. 1-6, in FIG. 7, at step 112, an engine, a nozzle, and a controller are obtained. The engine is configured to generate a gas jet, the nozzle has a throat that is configured to expand and contract, and the controller is configured to control the throat to expand and contract. The controller is further configured to control a magnitude of a thrust generated by the gas jet by controlling the throat to expand and contract. In some embodiments, the controller is configured to control the throat to close when additional thrust is required and to control the throat to open when reduced thrust is required. In some embodiments of method 110, the engine may comprise engine 22 or engine 52, the nozzle may comprise nozzle 24, nozzle 54 or nozzle 84, and the controller may comprise controller 26, controller 56 or controller 86.

At step 114, the nozzle is coupled with the jet engine. When doing so, position the nozzle aft of the engine to receive the gas jet produced by the jet engine. In some embodiments, the nozzle should be fluidly coupled with the jet engine. In such embodiments, the fluid coupling may cause all of the mass flow of the gas jet to enter the nozzle while in other embodiments, only a portion of the mass flow may be directed into the nozzle.

At step 116, the controller is coupled with the nozzle in a manner that permits the controller to control the throat. In some embodiments, the controller may be directly coupled with the throat of the nozzle while in other embodiments, the controller may be indirectly coupled with the throat of the nozzle. The coupling may be accomplished through either wired or wireless means and any such means that is effective to transmit requests, commands, and instructions from the controller to the nozzle may be employed.

At step 118, the controller is coupled with the engine in a manner that permits the controller to control the engine. As stated above, any suitable method that enables the transmission of commands and instructions from the controller to the engine may be employed. In embodiments of method 110 that include this method step, the controller may be configured to control the engine to maintain its current operating conditions when the controller contemporaneously controls the nozzle throat to open or close, as required to meet thrust requests. This will permit the engine to generate a constant mass flow rate and avoid spillage around the inlet.

At step 120, a plug is coupled with the nozzle. The plug is positioned such that the plug is at least partially disposed within the nozzle and such that a surface of the plug and an internal surface of the nozzle cooperate to form the nozzle throat. In some embodiments the nozzle plug is coupled with the nozzle in a manner that permits the nozzle plug to translate longitudinally in a forward and aftward direction. In other embodiments, in which the nozzle has an internally mounted shroud that is configured to move in a forward and aftward direction within the nozzle, the nozzle plug is mounted in a fixed manner with respect to the nozzle that will cause the nozzle plug to remain static.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

The present disclosure may be further described by the following Aspects.
**Aspect 1.** A propulsion system for an aircraft, the propulsion system comprising:
   an engine configured to produce a gas jet;
   a nozzle coupled with the engine and disposed to receive the gas jet, the nozzle having a throat configured to expand and contract; and
   a controller operatively coupled with the throat, the controller configured to control the throat to expand and contract, and to control a magnitude of a thrust imparted by the gas jet by controlling the throat to expand and contract, the controller further configured to control the magnitude of the thrust by controlling the throat to expand and contract when the aircraft is flying at at least a local speed of sound.
**Aspect 2.** The propulsion system of Aspect 1, wherein the nozzle includes an exit plane configured to expand and contract, wherein the controller is operatively coupled with the exit plane, wherein the controller is configured to control the exit plane to expand and contract and wherein the controller is further configured to control the exit plane to remain static while the controller controls the magnitude of the thrust by controlling the throat to expand and contract.
**Aspect 3.** The propulsion system of Aspects 1 or 2, wherein the nozzle includes a static exit plane.
**Aspect 4.** The propulsion system of any one of Aspects 1-3, wherein the controller is further configured to be communicatively coupled with a component on the aircraft and to receive information from the component indicative of a thrust requirement of the aircraft and to control the throat to expand and contract based on the information.
**Aspect 5.** The propulsion system of any one of Aspects 1-4, wherein the controller is configured to expand the throat to reduce the thrust and to contract the throat to increase the thrust.
**Aspect 6.** The propulsion system of any one of Aspects 1-5, wherein the controller is operatively coupled with the engine and configured to control the engine in a manner that maintains a substantially constant mass flow rate while controlling the throat to expand and contract.
**Aspect 7.** The propulsion system of any one of Aspects 1-6, wherein the controller is operatively coupled with the engine and is configured to control the magnitude of the thrust by controlling the engine to vary a mass flow rate when the controller receives information indicating that the aircraft is flying below a local speed of sound and by controlling expansion and contraction of the throat when the controller receives information indicating that the aircraft is flying at at least the local speed of sound.
**Aspect 8.** The propulsion system of any one of Aspects 1-7, further comprising a plug at least partially disposed within the nozzle, a first surface of the plug and a first internal surface of the nozzle cooperating to define the throat.
**Aspect 9.** The propulsion system of Aspect 8, wherein the plug is configured to translate in an axial direction with respect to the nozzle, wherein translation of the plug in an aft direction causes the throat to expand, wherein translation of the plug in a forward direction causes the throat to contract, and wherein the controller is operatively coupled with the plug and is configured to control the plug to translate in the aft direction and the forward direction to expand the throat and contract the throat, respectively.
**Aspect 10.** The propulsion system of Aspects 8 or 9, wherein the first internal surface is configured to translate in an axial direction with respect to the plug, wherein translation of the first internal surface in an aft direction causes the throat to contract, wherein translation of the first internal surface in a forward direction causes the throat to expand and wherein the controller is operatively coupled with the first internal surface and is configured to control the first internal surface to translate in the forward direction and the aft direction to expand the throat and contract the throat, respectively.
**Aspect 11.** The propulsion system of Aspect 10, wherein the first internal surface comprises a cylindrical shroud movably mounted to an internal surface of the nozzle.
**Aspect 12.** A method of manufacturing a propulsion system for an aircraft, the method comprising:
   obtaining an engine, a nozzle, and a controller, the engine being configured to generate a gas jet, the nozzle having a throat configured to expand and contract, and the controller being configured to control the throat to expand and contract and further configured to control a magnitude of a thrust generated by the gas jet by controlling the throat to expand and contract, the controller further configured to control the magnitude of the thrust by controlling the throat to expand and contract when the aircraft is flying at at least a local speed of sound;
   coupling the nozzle with the engine in a position to receive the gas jet; and
   operatively coupling the controller with the nozzle.
**Aspect 13.** The method of Aspect 12, wherein coupling the nozzle with the engine comprises fluidly coupling the nozzle with the engine.
**Aspect 14.** The method of Aspects 12 or 13, wherein the controller is further configured to receive information indicative of a thrust requirement of the aircraft and to control the throat to expand and contract based on the information.
**Aspect 15.** The method of Aspect 14, wherein the controller is configured to be communicatively coupled with a component on the aircraft and to receive the information from the component.
**Aspect 16.** The method of any one of Aspects 12-15, wherein the controller is configured to expand the throat to reduce the thrust and to contract the throat to increase the thrust.
**Aspect 17.** The method of any one of Aspects 12-16, wherein the controller is configured to control the engine in a manner that maintains a substantially constant mass flow rate while controlling the throat to expand and contract.
**Aspect 18.** The method of any one of Aspects 12-17, further comprising:
   operatively coupling the controller with the engine, wherein the controller is configured to control the magnitude of the thrust by controlling the engine when the aircraft is flying below a local speed of sound and by controlling expansion and contraction of the throat when the aircraft is flying at at least the local speed of sound.
**Aspect 19.** The method of any one of Aspects 12-18, further comprising:
   coupling a plug with the nozzle such that the plug is at least partially disposed within the nozzle and such that a first surface of the plug and a first internal surface of the nozzle cooperate to define the throat.
**Aspect 20.** The method of Aspect 19, wherein coupling the plug with the nozzle comprises arranging the plug coaxially with respect to the nozzle.

## Claims

1. A propulsion system for an aircraft, the propulsion system comprising:
an engine configured to produce a gas jet;
a nozzle coupled with the engine and disposed to receive the gas jet, the nozzle having a throat configured to expand and contract; and
a controller operatively coupled with the throat, the controller configured to control the throat to expand and contract, and to control a magnitude of a thrust imparted by the gas jet by controlling the throat to expand and contract, the controller further configured to control the magnitude of the thrust by controlling the throat to expand and contract when the aircraft is flying at at least a local speed of sound.

2. The propulsion system of claim 1, wherein the nozzle includes an exit plane configured to expand and contract, wherein the controller is operatively coupled with the exit plane, wherein the controller is configured to control the exit plane to expand and contract and wherein the controller is further configured to control the exit plane to remain static while the controller controls the magnitude of the thrust by controlling the throat to expand and contract.

3. The propulsion system of claims 1 or 2, wherein the nozzle includes a static exit plane.

4. The propulsion system of any one of claims 1-3, wherein the controller is further configured to be communicatively coupled with a component on the aircraft and to receive information from the component indicative of a thrust requirement of the aircraft and to control the throat to expand and contract based on the information.

5. The propulsion system of any one of claims 1-4, wherein the controller is configured to expand the throat to reduce the thrust and to contract the throat to increase the thrust.

6. The propulsion system of any one of claims 1-5, wherein the controller is operatively coupled with the engine and configured to control the engine in a manner that maintains a substantially constant mass flow rate while controlling the throat to expand and contract.

7. The propulsion system of any one of claims 1-6, wherein the controller is operatively coupled with the engine and is configured to control the magnitude of the thrust by controlling the engine to vary a mass flow rate when the controller receives information indicating that the aircraft is flying below a local speed of sound and by controlling expansion and contraction of the throat when the controller receives information indicating that the aircraft is flying at at least the local speed of sound.

8. The propulsion system of any one of claims 1-7, further comprising a plug at least partially disposed within the nozzle, a first surface of the plug and a first internal surface of the nozzle cooperating to define the throat.

9. The propulsion system of claim 8, wherein the plug is configured to translate in an axial direction with respect to the nozzle, wherein translation of the plug in an aft direction causes the throat to expand, wherein translation of the plug in a forward direction causes the throat to contract, and wherein the controller is operatively coupled with the plug and is configured to control the plug to translate in the aft direction and the forward direction to expand the throat and contract the throat, respectively.

10. The propulsion system of claims 8 or 9, wherein the first internal surface is configured to translate in an axial direction with respect to the plug, wherein translation of the first internal surface in an aft direction causes the throat to contract, wherein translation of the first internal surface in a forward direction causes the throat to expand and wherein the controller is operatively coupled with the first internal surface and is configured to control the first internal surface to translate in the forward direction and the aft direction to expand the throat and contract the throat, respectively.

11. A method of manufacturing a propulsion system for an aircraft, the method comprising:
obtaining an engine, a nozzle, and a controller, the engine being configured to generate a gas jet, the nozzle having a throat configured to expand and contract, and the controller being configured to control the throat to expand and contract and further configured to control a magnitude of a thrust generated by the gas jet by controlling the throat to expand and contract, the controller further configured to control the magnitude of the thrust by controlling the throat to expand and contract when the aircraft is flying at at least a local speed of sound;
coupling the nozzle with the engine in a position to receive the gas jet; and
operatively coupling the controller with the nozzle.

12. The method of claim 11, wherein coupling the nozzle with the engine comprises fluidly coupling the nozzle with the engine.

13. The method of claims 11 or 12, wherein the controller is further configured to receive information indicative of a thrust requirement of the aircraft and to control the throat to expand and contract based on the information, and/or
wherein the controller is configured to expand the throat to reduce the thrust and to contract the throat to increase the thrust, and/or
wherein the controller is configured to control the engine in a manner that maintains a substantially constant mass flow rate while controlling the throat to expand and contract.

14. The method of any one of claims 11-13, further comprising:
operatively coupling the controller with the engine,
wherein the controller is configured to control the magnitude of the thrust by controlling the engine when the aircraft is flying below a local speed of sound and by controlling expansion and contraction of the throat when the aircraft is flying at at least the local speed of sound.

15. The method of any one of claims 11-14, further comprising:
coupling a plug with the nozzle such that the plug is at least partially disposed within the nozzle and such that a first surface of the plug and a first internal surface of the nozzle cooperate to define the throat.
